# EUROPÄISCHE PATENTSCHRIFT

(11) **EP 0 716 248 B1**
(45) Veröffentlichungstag und Bekanntmachung des Hinweises auf die Patenterteilung: **11.02.1998**
(21) Anmeldenummer: 95117029.9
(22) Anmeldetag: 28.10.1995
(51) Int. Cl.: F16H 47/04

(54) **Lastschaltgetriebe mit 5-welligem Umlaufgetriebe**
Power shift gearing with five-shaft orbital transmission
Transmission de changement de vitesse sous charge avec transmission orbitale à cinq arbres

(30) Priorität: 05.12.1994 DE 4443267
(43) Veröffentlichungstag der Anmeldung: 12.06.1996
(73) Patentinhaber: CLAAS KGaA, 33428 Harsewinkel (DE)
(72) Erfinder: Fredriksen, Nils, D-33428 Harsewinkel (DE)

(56) Entgegenhaltungen:
- EP-A- 0 411 371
- EP-A- 0 428 865
- DE-A- 4 343 402
- DE-C- 4 323 358
- US-A- 3 597 998

## Beschreibung

Die Erfindung betrifft ein mehrgängiges Lastschaltgetriebe mit einem 5-welligen Umlaufgetriebe entsprechend den Merkmalen im Oberbegriff von Anspruch 1.

Ein derartiges Lastschaltgetriebe ist aus der DE-C1-43 23 358 bekannt. Bei diesem Getriebe ist das hydrostatische Verstellgetriebe eingangsseitig stets fest mit dem Antrieb gekoppelt, und von diesem wird das Umlaufgetriebe einerseits angesteuert, das andererseits über die Wendekupplung mit dem Antrieb gekoppelt ist. Deshalb läuft das Verstellgetriebe im Leerlauf, d.h. wenn kein Gang eingelegt ist und auch die Kupplung nicht betätigt ist, stets bei eingeschwenkter Verstelleinheit mit. Beim Anfahren werden anfangs die Wendekupplung eingeschaltet und gleichzeitig die hydrostatische Verstelleinheit voll ausgeschwenkt, so daß am Umlaufgetriebe ein Ausgleich der beiden Antriebe besteht, d.h. ein sogenannter geregelter Nullpunkt gehalten wird, wobei ein ausgangsseitig angeschlossenes Fahrzeug stehen bleibt. Beim Zurückschwenken der Verstelleinheit fährt dann das Fahrzeug entsprechend der Drehzahldifferenz der Umlaufgetriebe an. Dieses Herstellen der Parallelität des Einkuppelvorganges und des Ausschwenkens der Verstelleinheit, d.h. das Halten des geregelten Nullpunkts, stellt hohe Anforderungen an die elektronische Steuerung der zugehörigen Stellmittel; denn es müssen die Winkel-Beschleunigungsvorgänge, die diese unterschiedlichen Stellmittel auf den Abtrieb bezogen jeweils bewirken, völlig parallel erbracht werden, da während eines zeitlich unterschiedlichen Greifens der Wendekupplung im Vergleich zum Verschwenkvorgang ein die Sicherheit gefährdender Abtrieb in der nicht gewollten Richtung erfolgen könnte, was insbes. bei Fahrzeugen völlig unzulässig ist. Nachteilig ist weiter, daß beim Reversieren die Verstelleinheit im Stillstand in die entgegengesetzte Extremlage verstellt werden muß, wodurch das Reversieren auch unzulässig lange dauert.

Ein gattungsähnliches dreiwelliges Lastschaltgetriebe mit zwei Fahrbereichen und mit zwei Verstelleinheiten ist aus der US 3,597,998 bekannt. Dort ist das hydrostatische Verstellgetriebe über das Wendegetriebe und seine Wendekupplung an den Antrieb anschließbar. Bei der dort gezeigten Anordnung erweist sich als nachteilig, daß sich die Pumpen im Anfahrpunkt in der Neutralstellung befinden, was die Reaktionsgeschwindigkeit und das Leistungsverhalten negativ beeinflußt. Zudem müssen wegen der niedrigeren Gangzahl die Verstelleinheiten sehr groß ausgelegt werden, um eine vergleichbare Spreizung erreichen zu können. Zudem müssen die Verstelleinheiten noch über zusätzliche Kupplungen auf das Planetengetriebe durchgeschaltet werden.

Aufgabe der Erfindung ist es, das gattungsgemäße Getriebe so zu verbessern, daß ein sicheres Anfahren und ein schnelleres Reversieren bei verringertem Steuerungsaufwand erbracht wird.

Die Lösung besteht in den Merkmalen des Anspruchs 1.

Vorteilhafte Ausgestaltungen sind in den Unteransprüchen angegeben.

Kern der Erfindung ist es, daß die hydrostatische Verstelleinheit nicht ständig mit dem Antrieb in Verbindung steht sondern hinter dem Wendegetriebe und der Anfahr-Wendekupplung, ebenso wie der direkte Eingang des Umlaufgetriebes, angeschlossen ist, also dazu stets einen synchronen und phasengleichen Antrieb hat; demgemäß entfällt eine Synchron-Regelung der Verstelleinheit beim Anfahr-Kuppeln und deren Umsteuerung von einer Extremlage in die andere beim Reversieren.

Vorzugsweise ist die Anfahr- und Wendekupplung eine sogenannte nasse Lamellenkupplung, so daß ein Anfahren und Reversieren auch in höheren Fahrbereichen erfolgen kann, was zur weitergehenden Sicherheit und zur Bedienungserleichterung dient.

Je nach dem Anwendungszweck läßt sich das Getriebe durch geringfügige Änderung als 4- oder 5-Ganggetriebe ausrüsten.

Zur Konstruktionsvereinfachung trägt weiter bei, daß sämtliche Gangkupplungen auf einer einzigen Kupplungswelle angeordnet sind, wodurch das mitlaufende Trägheitsmoment der Kupplungswelle außerordentlich klein ist. Als Kupplungen sind für ein 4-Ganggetriebe nur zwei Kupplungspaare jeweils mit einer 3-Stellungsansteuerung erforderlich, und das 5-Ganggetriebe benötigt nur eine weitere Einzelkupplung.

Die Gesamtgetriebeeinheit ist sehr kompakt in einem Blockgehäuse angeordnet, wobei das hydrostatische Verstellgetriebe mit parallelen Achsen zentral liegt und das Umlaufgetriebe mit der Konstanteinheit koaxial angeordnet ist und symmetrisch zu beiden Seiten des Verstellgetriebes etwa in dessen Symmetrieebene die Eingangswelle und die Kupplungswelle angeordnet sind, die gewöhnlich auch als Haupt-Abtriebwelle dient.

In einer weiteren Ausgestaltung ist in der genannten Symmetrieebene anschließend an die Kupplungswelle vorzugsweise über ein Abtriebkupplung eine Proportional-Abtriebwelle angeordnet.

Die Hauptabtriebwelle dient beispielsweise dem Hinterradantrieb eines Fahrzeuges und die kuppelbare Proportionalabtriebwelle dem Vorderradantrieb, wobei die Vorder- und Hinterräder gewöhnlich unterschiedliche Durchmesser haben. Die Eingangswelle ist bevorzugt beidseitig aus dem Blockgehäuse herausgeführt, so daß sie einerseits mit einer Kurbelwelle eines Antriebsmotors verbindbar ist und andererseits als eine Zapfwelle dienen kann.

Die schmale kompakte Bauform ist besonders für sogenannte Rahmenbautraktoren und Blockbautraktoren geeignet.

Vorteilhafte Ausgestaltungen sind in den Figuren 1 bis 5 dargestellt.
- Fig. 1: zeigt ein Getriebeschema eines 5-Ganggetriebes;
- Fig. 2: zeigt ein Getriebeschema eines 4-Ganggetriebes;
- Fig. 3: zeigt ein Leistungsflußdiagramm des hydrostatischen Verstellgetriebes über die Gang-Geschwindigkeitsbereiche eines mit dem Getriebe angesteuerten Fahrzeuges;
- Fig. 4: zeigt eine Stirnansicht eines Getriebeblocks mit schematisierten Getrieberädern;
- Fig. 5: zeigt ein Kupplungsschema der 5-Gangschaltung.

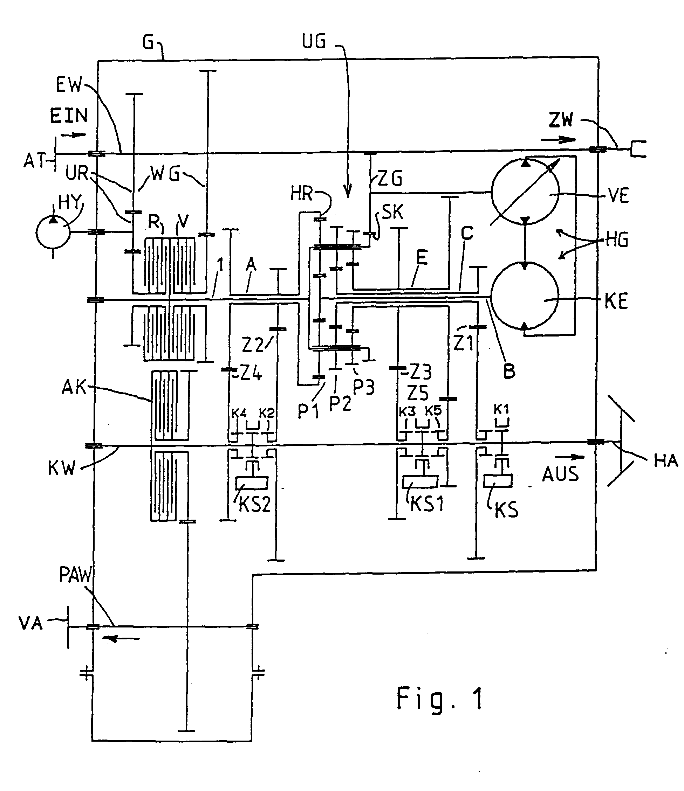

Figur 1 zeigt ein 5-welliges Getriebe, das von einem Umlaufgetriebe (UG) gebildet wird, welches einerseits von einer Stegradwelle (1) antriebsseitig beaufschlagt wird und andererseits von einer Sonnenradwelle (B) über ein hydrostatisches Verstellgetriebe (HG) beaufschlagt wird. Abtriebsseitig sind am Umlaufgetriebe (UG) drei Hohlwellen (A, C, E) vorgesehen, von denen zwei mit weiteren Sonnenrädern verbunden sind und eine mit einem Hohlrad (HR) der anderen Planetenstufe (P1) verbunden ist. Insgesamt sind also drei Planetenstufen (P1, P2, P3) in dem Umlaufgetriebe (UG) enthalten. Der Stegradwelle (1) ist eine Reversierkupplung (R, V) vorgeschaltet, welche über ein Wendegetriebe (WG) mit der Eingangswelle (EW) verbunden ist, die über einen Antrieb (AT), beispielsweise einem Verbrennungsmotor, anzusteuern ist. Das Wendegetriebe (WG) enthält Umkehrräder (UR) für das Rückwärtsfahren. An einem dieser Umkehrräder (UR) ist eine Hydraulikversorgung (HY) außerhalb des Gehäuse (G) angekoppelt.

An dem Stegrad ist ein Stegradzahnkranz (SK) angebracht, welcher mit einem Zahnradgetriebe (ZG) kämmt, welches die Verstelleinheit der hydrostatischen Getriebeeinheit (HG) ansteuert. Die Konstanteinheit (KE) des hydrostatischen Verstellgetriebes (HG) steuert die innere Sonnenradwelle (B) der ersten Planetenstufe (P1) an.

In dem Gehäuse (G) ist weiterhin eine Kupplungswelle (KW) gelagert, auf der die Kupplungen (K1 - K5) von fünf Gängen angeordnet sind. Die Zahnradgetriebe (Z1 - Z5) der fünf Gänge sind jeweils einerseits mit einer der Hohlwellen (A, C, E) des Umlaufgetriebes (UG) verbunden und andererseits zusammen mit dem zugehörigen Kupplungsteil auf der Kupplungswelle (KW) gelagert. Vorteilhaft ist eine Einzelkupplung (K1) für den ersten Gang vorgesehen, dessen Hohlwelle (C) im Anfangszustand beim Anfahren stillsteht. Weiterhin sind 2 Kupplungspaare (K3, K5; K2, K4) für die entsprechenden Ganggetriebe (Z3, Z5; Z2, Z4) vorgesehen. Die beiden Kupplungspaare weisen jeweils eine 3-Stellungs-Stellvorrichtung (KS1, KS2) auf, deren Neutralstellung jeweils mittig zwischen den beiden Kupplungstellungen liegt. Der erste Gang weist nur einen einfachen Kupplungssteller (KS) auf. Die Anordnung sämtlicher Gang-Kupplungen (K1 - K5) auf einer Reihe auf einer Welle erbringt eine einfache und übersichtliche Bauweise.

Der Abtrieb (AUS) wird vorzugsweise von der Kupplungswelle (KW) aus vorgenommen und führt, sofern es sich um einen Antrieb eines Traktors oder ein ähnliches Fahrzeuges handelt, als Hauptabtrieb (HA) an die Hinterräder desselben.

Optional ist ein weiterer Abtrieb mit proportionaler Drehzahl insbes. an die Vorderräder eines Fahrzeuges vorgesehen. Hierzu befindet sich eine Abtriebskupplung (AK) an der Kupplungswelle (KW), von der über ein Zahnradgetriebe eine Proportional-Abtriebwelle (PAW) angesteuert wird, welche insbes. auf den Vorderradantrieb (VA) des Fahrzeuges führt.

Im übrigen kann in bekannter Weise die Eingangswelle (EW) gegenüber der Antriebsseite (EIN) auf eine Zapfwelle (ZW) an der anderen Seite des Gehäuses (G) herausgeführt sein.

Da beide Eingänge des Umlaufgetriebes (UG) hinter der Wende-Kupplung (R, V) angeschlossen sind, wird nach dem Einkuppeln die Getriebewelle (C) des ersten Ganges durch die Einstellung der Verstelleinheit (VE) zum Stillstand gebracht und dann die Synchronkupplung (K1) eingelegt. Auch die weiteren Kupplungen (K2 - K5) der anderen Gänge sind Synchronkupplungen, vorzugsweise Klauenkupplungen, die sehr einfach aufgebaut sind und stets bei Drehzahlgleichheit an den zu kuppelnden Teilen betätigt werden. Hierdurch weisen sie praktisch keinen Verschleiß auf.

Das Gesamtgetriebe weist die geringsten Verluste auf, wenn jeweils die einzelnen Gänge in die Mittelstellung gebracht sind, wobei das hydrostatische Gestellgetriebe (HG) sich im Leerlauf befindet, und dessen Abtriebswelle (B) stillsteht.

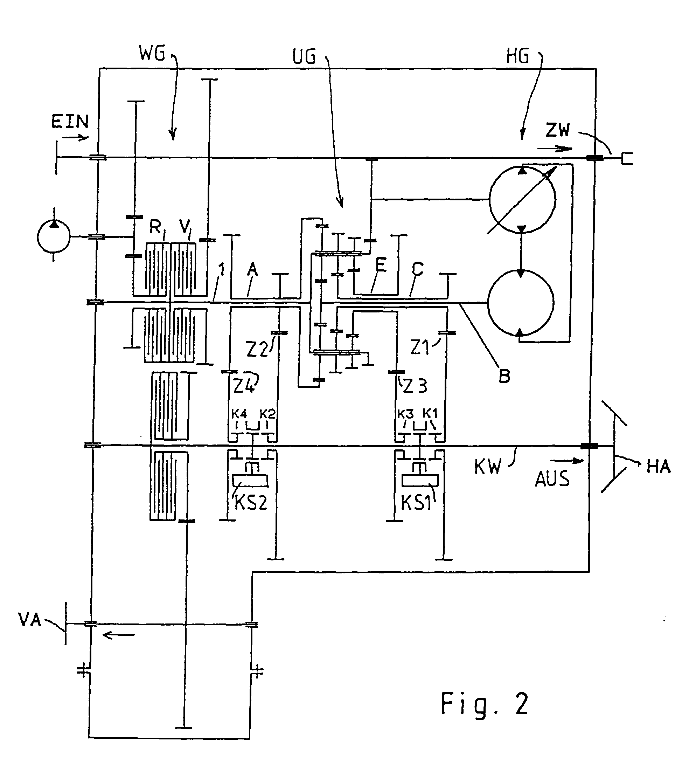

Figur 2 zeigt ein 4-Ganggetriebe, welches dem vorstehend beschriebene 5-Ganggetriebe sehr ähnlich ist, weshalb hier nur die Unterschiede beschrieben werden. Auf der Kupplungswelle (KW) sind zwei Kupplungspaare (K1, K3; K2, K4) angeordnet, denen jeweils die Zahnradgetriebe (Z1 - Z4) der vier Gänge zugehören. Das Zahnradgetriebe (Z1) des ersten Ganges ist wiederum an der Hohlwelle (C) des Umlaufgetriebes (UG) angeordnet und so getriebemäßig beaufschlagt, daß bei eingelegter Anfahr-Kupplung (R, V) die Ansteuerung des Umlaufgetriebes (UG) über die Stegradwelle (1) und über die Sonnenradwelle (B) durch das hydrostatische Verstellgetriebe (HG) sich im Stillstand befindet. Die weitere Hohlwelle (E) des Umlaufgetriebes (UG) führt zu dem Zahnradgetriebe (Z3) des dritten Ganges, und die weitere Hohlwelle (A) trägt die Zahnräder (Z2, Z4) des zweiten und vierten Ganges.

Das erste Kupplungspaar (K1, K3) ist von einer 3-Stellungs-Stellvorrichtung mit neutraler Mittelstellung beaufschlagt. Das zweite Kupplungspaar (K2, K4) ist von einer zweiten 3-Stellungs-Stellvorrichtung mit neutraler Mittelstellung angesteuert.

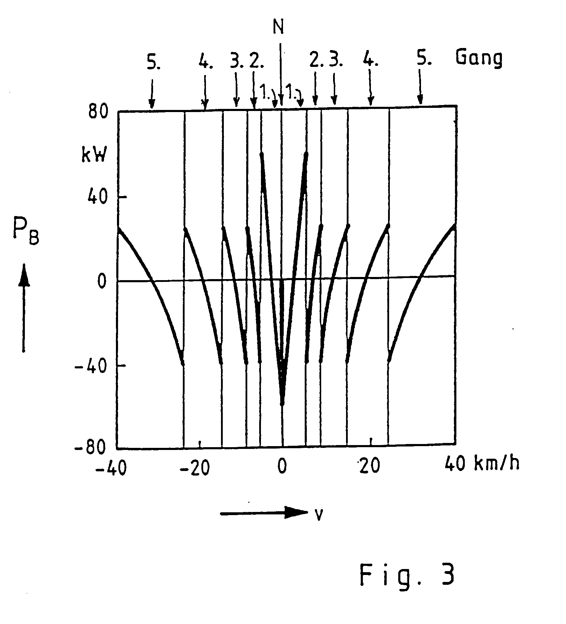

Figur 3 zeigt ein Schema, bei dem von einem Einsatz des Getriebes in einem Fahrzeug ausgegangen wird, welches mit der Geschwindigkeit (v) in den Gängen (1. - 5.) vor- bzw. rückwärts anzutreiben ist. In der vertikalen Achse ist jeweils die Leistung angegeben, welche auf der Getriebewelle (B) von dem hydrostatischen Verstellgetriebe (HG) an das Umlaufgetriebe abgegeben wird. Man erkennt, daß in der Neutralstellung (N), in der keiner der Gänge eingelegt ist und auch die Reversierkupplung (R, V) nicht betätigt ist, keine Leistung verbraucht wird.

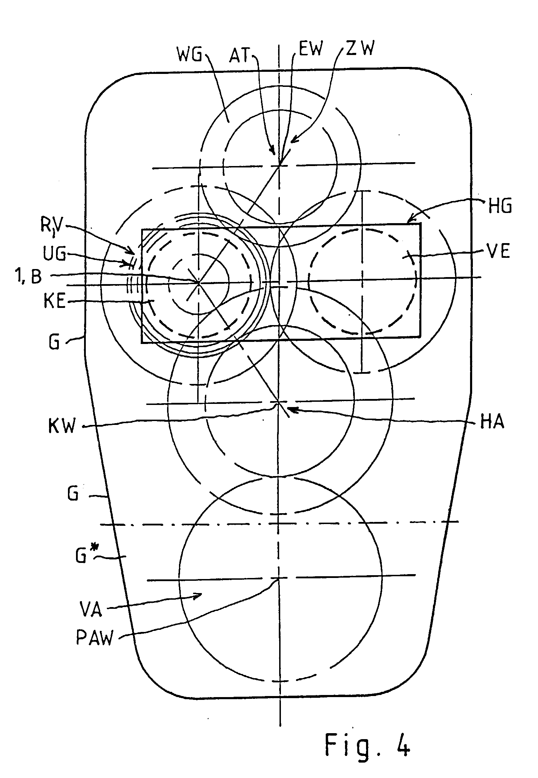

Figur 4 zeigt eine vorteilhafte Anordnung der gesamten Getriebeeinheit in einem Gehäuse (G) in Stirnansicht. Im Bild ist zentral querliegend das hydrostatische Verstellgetriebe (HG) mit seiner Verstelleinheit (VE) und seiner Konstanteinheit (KE) angeordnet. Koaxial zur letzteren sind die Reversierkupplung (R, V) und das Umlaufgetriebe (UG) mit seinen Antriebsachsen (1, B) angeordnet. Etwa in der Symmetrieebene zwischen der Verstelleinheit (VE) und der Konstanteinheit (KE) sind beidseitig dieser beiden Einheiten einerseits die Eingangswelle (EW) und andererseits die Kupplungswelle (KW) gelagert. Die Eingangswelle (EW) ist einerseits zum Antrieb (AT) und andererseits als Zapfwelle (ZW) herausgeführt und trägt das Wendegetriebe (WG). Die Kupplungswelle (KW) ist aus dem Gehäuse zu dem Haupt- oder Hinterradantrieb (HA) herausgeführt.

In einer ersten einfachen Ausführung schließt das Gehäuse (G) an der eingezeichneten strichpunktierten Linie ab und ergibt eine äußerst kompakte Blockform. Sofern eine Proportional-Antriebswelle (PAW), vorgesehen ist, die insbes. auf einen Vorderradantrieb (VA) führt, der für einen anderen Raddurchmesser ausgelegt ist, so ist das Gehäuse um einen Gehäuseabschnitt (G∗) über die strichpunktierte Linie hinaus verlängert, und dort ist vorzugsweise in der besagten Symmetrieebene die Proportional-Antriebswelle (PAW) gelagert, welche das zugehörige Zahnradgetriebe trägt, das über die Abtrieb-Kupplung mit der Kupplungswelle (KW) verbunden ist.

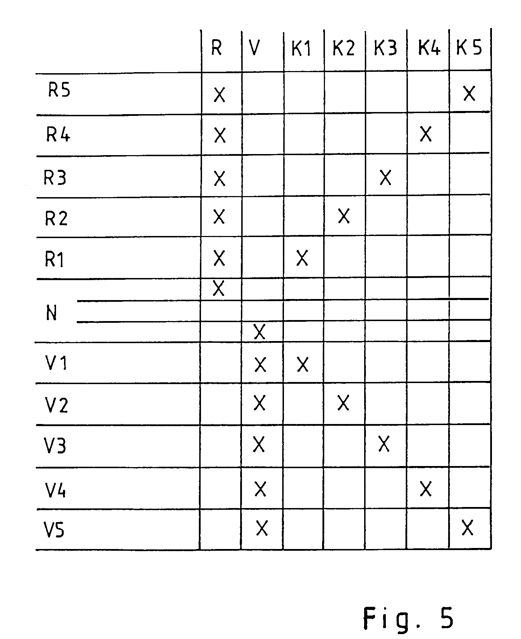

Figur 5 zeigt ein Schaltschema für die einzelnen Kupplungen (K1 - K5; R, V) mit den zugehörigen Vorwärtsgängen (V1 - V5) und den Rückwärtsgängen (R1 - R5) sowie der Neutralstellung (N). Wie man erkennt, wird aus der Neutralstellung (N) das Reversiergetriebe (R, V) entweder mit der Rückwärtskupplung (R) oder mit der Vorwärtskupplung (V) in der Neutralstellung (N) eingeschaltet, und weiter wird dann eine der Gangschaltungskupplungen (K1 - K5) eingelegt. Es ist eine Steuerung vorgesehen, die dafür Sorge trägt, daß jeweils die Kupplungen (K1 - K5) nur im Synchronzustand ein- bzw. ausgeschaltet werden. Das Getriebe ist so ausgelegt, daß die hydrostatische Verstelleinheit in jedem Gang von einer Extremstellung in die andere Extremstellung verbracht wird und jeweils dort angrenzend passende Synchronität für die Kupplung des benachbarten Ganges besteht. Insbes. ist in der Neutralstellung (N) keine Umsteuerung der Verstelleinheit notwendig, um von einem Vorwärtsantrieb in den Rückwärtsantrieb überzugehen. Bei ausgekuppeltem Reversiergetriebe (R, V) fließt überhaupt keine Leistung in die Getriebe (UG, HG), da sowohl das Umlaufgetriebe (UG) als auch die hydrostatische Getriebeeinheit (HG) vom Antrieb (AT) getrennt sind.

## Patentansprüche

1. Mehrgängiges Lastschaltgetriebe mit einem fünf-welligen Umlaufgetriebe (UG),
- dessen erste Getriebewelle (1) über ein Wendegetriebe (WG) und eine Wende-Kupplung (R,V) mit einem Antrieb (AT) verbindbar ist,
- dessen zweite Getriebewelle (B) an eine Konstanteinheit (KE) eines hydrostatischen Verstellgetriebes (HG) angeschlossen ist, dessen Verstelleinheit (VE) mit dem Antrieb (AT) gekoppelt ist,
- an dessen dritte Getriebewelle (A) eine Zahnradgetriebestufe (Z2, Z4) und eine zugehörige Gangkupplung (K2, K4) und mindestens ein Abtrieb (HA) angeschlossen ist,
- an dessen vierte Getriebewelle (C) eine Zahnradgetriebestufe (Z1) und eine zugehörige Gangkupplung (K1) und der mindestens eine Abtrieb (HA) angeschlossen ist, und
- an dessen fünfte Getriebewelle (E) eine Zahnradgetriebestufe (Z3) und eine zugehörige Gangkupplung (K3) und der mindestens eine Abtrieb (HA) angeschlossen ist, dadurch gekennzeichnet, daß
- die Verstelleinheit (VE) des hydrostatischen Verstellgetriebes (HG) über die Wende-Kupplung (R, V) und das Wendegetriebe (WG) in allen Vorwärts- und Rückwärtsgängen an den Antrieb (AT) angeschlossen ist.

2. Mehrgängiges Lastschaltgetriebe nach Anspruch 1, bei dem
- die erste Getriebewelle (1) eine Stegradwelle (1) und die zweite Getriebewelle (B) eine Sonnenradwelle einer ersten Planetenstufe (P1) ist, und
- die Verstelleinheit (VE) des hydrostatischen Verstellgetriebes (HG) über ein Zahnradgetriebe (ZG) an die Stegradwelle (1) angeschlossen ist.

3. Mehrgängiges Lastschaltgetriebe nach Anspruch 2, bei dem das Zahnradgetriebe (ZG) einen Stegradzahnkranz (SK) umfaßt.

4. Mehrgängiges Lastschaltgetriebe nach einem der vorstehenden Ansprüche, bei dem
- die dritte Getriebewelle (A) eine Hohlwelle ist, die die erste Getriebewelle (1) aufnimmt und die von einem mit ihr verbundenen Hohlrad (HR) der ersten Planetenstufe (P1) des Umlaufgetriebes (UG) angetrieben ist,
- die vierte Getriebewelle (C) eine Hohlwelle ist, die die zweite Getriebewelle (B) aufnimmt und die von einem Sonnenrad einer zweiten Planetenstufe (P2) angetrieben ist, und
- die fünfte Getriebewelle (E) auf der vierten Getriebewelle (C) als Hohlwelle gelagert und mit einem Sonnenrad einer dritten Planetenstufe (P3) verbunden ist.

5. Mehrgängiges Lastschaltgetriebe nach einem der vorstehenden Ansprüche, das vier Gangkupplungen und vier Zahnradgetriebestufen aufweist, die mit dem Wendegetriebe vier Vorwärts- und vier Rückwärtsgänge bilden, bei dem die Gangkupplungen ein erstes und zweites Kupplungspaar (K1, K3 und K2, K4) bilden, die auf einer Kupplungswelle (KW) angeordnet und jeweils über eine 3-Stellungs-Stellvorrichtung (KS1, KS2) betätigbar sind, wobei
- die Gangkupplung (K1) des ersten Kupplungspaares mit der mit der vierten Getriebewelle (C) verbundenen Zahnradgetriebestufe (Z1) eine erste Gangstufe bildet,
- die Gangkupplung (K3) des ersten Kupplungspaares mit der mit der fünften Getriebewelle (E) verbundenen Zahnradgetriebestufe (Z3) eine dritte Gangstufe bildet,
- die Gangkupplung (K2) des zweiten Kupplungspaares mit der mit der dritten Getriebewelle (A) verbundenen Zahnradgetriebestufe (Z2) eine zweite Gangstufe bildet, und
- die Gangkupplung (K4) des zweiten Kupplungspaares mit der mit der dritten Getriebewelle (A) verbundenen Zahnradgetriebestufe (Z4) eine vierte Gangstufe bildet.

6. Mehrgängiges Lastschaltgetriebe nach einem der Ansprüche 1 bis 4, das fünf Gangkupplungen und fünf Zahnradgetriebestufen aufweist, die mit dem Wendegetriebe fünf Vorwärts- und fünf Rückwärtsgänge bilden, bei dem
- vier Gangkupplungen ein erstes und zweites Kupplungspaar (K3, K5; K2, K4) bilden, die auf einer Kupplungswelle (KW) angeordnet und jeweils über eine 3-Stellungs-Stellvorrichtung (KS1, KS2) betätigbar sind, und
- eine Gangkupplung eine Einzelkupplung (K1) ist, die auf der Kupplungswelle angeordnet ist und über eine 2-Stellungs-Stellvorrichtung (KS) betätigbar ist, wobei
- die Einzelkupplung (K1) mit der mit der vierten Getriebewelle (C) verbundenen Zahnradgetriebestufe (Z1) eine erste Gangstufe bildet,
- die Gangkupplung (K3) des ersten Kupplungspaares mit der mit der fünften Getriebewelle (E) verbundenen Zahnradgetriebestufe (Z3) eine dritte Gangstufe bildet,
- die Gangkupplung (K5) des ersten Kupplungspaares mit der mit der fünften Getriebewelle (E) verbundenen Zahnradgetriebestufe (Z5) eine fünfte Gangstufe bildet,
- die Gangkupplung (K2) des zweiten Kupplungspaares mit der mit der dritten Getriebewelle (A) verbundenen Zahnradgetriebestufe (Z2) eine zweite Gangstufe bildet, und
- die Gangkupplung (K4) des zweiten Kupplungspaares mit der mit der dritten Getriebewelle (A) verbundenen Zahnradgetriebestufe (Z4) eine vierte Gangstufe bildet.

7. Mehrgängiges Lastschaltgetriebe nach einem der vorstehenden Ansprüche 5 oder 6, bei dem der mindestens eine Abtrieb (HA) unmittelbar an die Kupplungswelle (KW) angeschlossen ist, welche über eine Abtriebkupplung (AK) und ein Zahnradgetriebe mit einer Proportional-Abtriebwelle (PAW) eines weiteren Abtriebs (VA) verbindbar ist.

8. Mehrgängiges Lastschaltgetriebe nach einem der vorstehenden Ansprüche, bei dem
- das Lastschaltgetriebe in einem Blockgehäuse (G) untergebracht ist, in dem die Verstelleinheit (VE) und die Konstanteinheit (KE) des hydrostatischen Verstellgetriebes (HG) achsparallel angeordnet sind,
- das Umlaufgetriebe (UG) koaxial an die Konstanteinheit (KE) angeschlossen ist, und
- der Antrieb (AT) mit seiner Eingangswelle (EW) und die Kupplungswelle (KW) jeweils symmetrisch beiderseits des Verstellgetriebes (HG) etwa in dessen Symmetrieebene, die zwischen dessen Einheiten (VE, KE) liegt, angeordnet sind.

9. Mehrgängiges Lastschaltgetriebe nach Anspruch 8, bei dem die Proportional-Abtriebwelle (PAW) in der Symmetrieebene im Anschluß an die Kupplungswelle (KW) angeordnet ist.

10. Mehrgängiges Lastschaltgetriebe nach Anspruch 8 oder 9, bei dem die Eingangswelle (EW) beidseitig aus dem Blockgehäuse (G) herausgeführt ist und gleichzeitig einen Zapfwellenanschluß (ZW) ermöglicht.

11. Mehrgängiges Lastschaltgetriebe nach einem der vorstehenden Ansprüche, bei dem die Wende-Kupplung (R, V) eine nasse Lamellenkupplung ist und die Gangkupplungen (K1 - K5) Synchronkupplungen sind.

## Claims

1. A multi-speed load shift transmission with a five-shaft planetary gear arrangement (UG)
- whose first transmission shaft (1) can be connected to a drive (AT) by way of a reversing gear arrangement (WG) and a reversing clutch (R, V),
- whose second transmission shaft (B) is connected to a constant unit (KE) of a hydrostatic control gear arrangement (HG) whose control unit (VE) is coupled to the drive (AT),
- to whose third transmission shaft (A) are connected a gear transmission stage (Z2, Z4) and an associated speed clutch (K2, K4) and at least one drive output (HA),
- to whose fourth transmission shaft (C) thereare connected a gear transmission stage (Z1) and an associated speed clutch (K1) and the at least one drive output (HA), and
- to whose fifth transmission shaft (E) there are connected a gear transmission stage (Z3) and an associated speed clutch (K3) and the at least one drive output (HA), characterised in that
- the control unit (VE) of the hydrostatic control gear arrangement (HG) is connected to the drive (AT) by way of the reversing clutch (R, V) and the reversing gear arrangement (WG) in all forward and reverse speeds.

2. A multi-speed load shift transmission according to claim 1 wherein
- the first transmission shaft (1) is a web gear shaft (1) and the second transmission shaft (B) is a sun gear shaft of a first planetary stage (P1), and
- the control unit (VE) of the hydrostatic control gear arrangement (HG) is connected to the web gear shaft (1) by way of a gear transmission (ZG).

3. A multi-speed load shift transmission according to claim 2 wherein the gear transmission (ZG) includes a web ring gear (SK).

4. A multi-speed load shift transmission according to one of the preceding claims wherein
- the third transmission shaft (A) is a hollow shaft which accommodates the first transmission shaft (1) and which is driven by a hollow gear (HR), which is connected thereto, of the first planetary stage (P1) of the planetary gear arrangement (UG),
- the fourth transmission shaft (C) is a hollow shaft which accommodates the second transmission shaft (B) and which is driven by a sun gear of a second planetary stage (P2), and
- the fifth transmission shaft (E) is mounted on the fourth transmission shaft (C) in the form of a hollow shaft and is connected to a sun gear of a third planetary stage (P3).

5. A multi-speed load shift transmission according to one of the preceding claims which has four speed clutches and four gear transmission stages which with the reversing gear arrangement form four forward gears and four reverse gears, wherein the speed clutches form first and second pairs of clutches (K1, K3 and K2, K4) which are arranged on a clutch shaft (KW) and which are respectively actuable by way of a 3-position setting means (KS1, KS2), wherein
- the speed clutch (K1) of the first pair of clutches with the gear transmission stage (Z1) connected to the fourth transmission shaft (C) forms a first speed stage,
- the speed clutch (K3) of the first pair of clutches with the gear transmission stage (Z3) connected to the fifth transmission shaft (E) forms a third speed stage,
- the speed clutch (K2) of the second pair of clutches with the gear transmission stage (Z2) connected to the third transmission shaft (A) forms a second speed stage, and
- the speed clutch (K4) of the second pair of clutches with the gear transmission stage (Z4) connected to the third transmission shaft (A) forms a fourth speed stage.

6. A multi-speed load shift transmission according to one of claims 1 to 4 which has five speed clutches and five gear transmission stages which form with the reversing gear arrangement five forward speeds and five reverse speeds, wherein
- four speed clutches form first and second pairs of clutches (K3, K5; K2, K4) which are arranged on a clutch shaft (KW) and which are respectively actuable by way of a 3-position setting means (KS1, KS2), and
- a speed clutch is a single clutch (K1) which is arranged on the clutch shaft and is actuable by way of a 2-position setting means (KS), wherein
- the single clutch (K1) with the gear transmission stage (Z1) connected to the fourth transmission shaft (C) forms a first speed stage,
- the speed clutch (K3) of the first pair of clutches with the gear transmission stage (Z3) connected to the fifth transmission shaft (E) forms a third speed stage,
- the speed clutch (K5) of the first pair of clutches with the gear transmission stage (Z5) connected to the fifth transmission shaft (E) forms a fifth speed stage,
- the speed clutch (K2) of the second pair of clutches with the gear transmission stage (Z2) connected to the third transmission shaft (A) forms a second speed stage, and
- the speed clutch (K4) of the second pair of clutches with the gear transmission stage (Z4) connected to the third transmission shaft (A) forms a fourth speed stage.

7. A multi-speed load shift transmission according to one of preceding claims 5 and 6 wherein the at least one drive output (HA) is connected directly to the clutch shaft (KW) which can be connected by way of a drive output clutch (AK) and a gear transmission arrangement to a proportional drive output shaft (PAW) of a further drive output (VA).

8. A multi-speed load shift transmission according to one of the preceding claims wherein
- the load shift transmission is disposed in a block casing (G) in which the control unit (VE) and the constant unit (KE) of the hydrostatic control gear arrangement (HG) are disposed in axis-parallel relationship,
- the planetary gear arrangement (UG) is connected coaxially to the constant unit (KE), and
- the drive (AT) with its input shaft (EW) and the clutch shaft (KW) are respectively arranged symmetrically on respective sides of the control gear arrangement (HG) approximately in the plane of symmetry thereof, which is between the units (VE, KE) thereof.

9. A multi-speed load shift transmission according to claim 8 wherein the proportional drive output shaft (PAW) is arranged in the plane of symmetry adjoining the clutch shaft (KW).

10. A multi-speed load shift transmission according to claim 8 or claim 9 wherein the input shaft (EW) is taken at both sides out of the block casing (G) and at the same time permits a power take-off connection (ZW).

11. A multi-speed load shift transmission according to one of the preceding claims wherein the reversing clutch (R, V) is a wet plate clutch and the speed clutches (K1 - K5) are synchronous clutches.

## Revendications

1. Boîte de vitesses à plusieurs rapports comportant un engrenage épicycloïdal (UG) à cinq arbres,
- dont le premier arbre (1) peut être lié à un moyen d'entraînement (AT) par l'intermédiaire d'un engrenage de renversement (WG) et d'un embrayage de renversement (R, V),
- dont le deuxième arbre (B) est lié à une unité à cylindrée fixe (KE) d'une transmission hydrostatique (HG), dont l'unité à cylindrée variable (VE) est couplée au moyen d'entraînement (AT),
- au troisième arbre (A) duquel sont liés un étage d'engrenages (Z2, Z4) avec un baladeur (K2, K4) associé et au moins une sortie de puissance (HA),
- au quatrième arbre (C) duquel sont liés un étage d'engrenages (Z1) avec un baladeur (K1) associé et la sortie de puissance (HA) au nombre d'au moins une,
- au cinqième arbre (E) duquel sont liés un étage d'engrenages (Z3) avec un baladeur (K3) associé et la sortie de puissance (HA) au nombre d'au moins une, caractérisé par le fait que
- l'unité à cylindrée variable (VE) de la transmission hydrostatique (HG) est liée au moyen d'entraînement (AT), dans tous les rapports avant et arrière, par l'intermédiaire de l'embrayage de renversement (R, V) et de l'engrenage de renversement (WG).

2. Boîte de vitesses à plusieurs rapports selon la revendication 1, dans laquelle
- le premier arbre (1) est un arbre porte-satellites (1) et le deuxième arbre (B) est un arbre porte-planétaire (B) d'un premier étage (P1) d'engrenages planétaires, et
- l'unité à cylindrée variable (VE) de la transmission hydrostatique (HG) est liée à l'arbre porte-satellites (1) par l'intermédiaire d'un engrenage (ZG).

3. Boîte de vitesses à plusieurs rapports selon la revendication 2, dans laquelle l'engrenage (ZG) est une couronne (SK) d'engrenages planétaires.

4. Boîte de vitesses à plusieurs rapports selon la revendication 2, dans laquelle
- le troisième arbre (A) est un arbre creux qui reçoit le premier arbre (1) et est entraîné par une roue à denture intérieure (HR) du premier étage planétaire (P1) de l'engrenage épicycloïdal (UG), liée audit arbre creux,
- le quatrième arbre (C) est un arbre creux qui reçoit le deuxième arbre (B) et est entraîné par une roue solaire d'un deuxième étage planétaire (P2) et,
- le cinqième arbre (E) est monté en tant qu'arbre creux sur le quatrième arbre (C) et est lié à une roue solaire d'un troisième étage planétaire (P3).

5. Boîte de vitesses à plusieurs rapports selon une des revendications précédentes, comportant quatre baladeurs et quatre étages d'engrenages qui forment avec l'engrenage de renversement quatre rapports avant et quatre rapports arrière, dans lequel les baladeurs forment une première et une deuxième paire de baladeurs (K1, K3 et K2, K4) qui sont disposées sur un arbre porte-baladeurs (KW) et peuvent être actionnées chacune par un dispositif de réglage à trois positions (KS1, KS2),
- le baladeur (K1) de la première paire de baladeurs formant un premier rapport avec l'étage d'engrenages (Z1) lié au quatrième arbre (C).
- le baladeur (K3) de la première paire de baladeurs formant un troisième rapport avec l'étage d'engrenages (Z3) lié au cinquième arbre (E),
- le baladeur (K2) de la deuxième paire de baladeurs formant un deuxième rapport avec l'étage d'engrenages (Z2) lié au troisième arbre (A) et,
- le baladeur (K4) de la deuxième paire de baladeurs formant un quatrième rapport avec l'étage d'engrenages (Z4) lié au troisième arbre (A).

6. Boîte de vitesses à plusieurs rapports selon une des revendications 1 à 4, comportant cinq baladeurs et cinq étages d'engrenages qui forment avec l'engrenage de renversement cinq rapports avant et cinq rapports arrière, dans lequel
- quatre baladeurs forment une première et une deuxième paire de baladeurs (K3, K5;K2, K4) qui sont disposées sur un arbre porte-baladeurs (KW) et peuvent être actionnées chacune par un dispositif de réglage à trois positions (KS1, KS2),
- un baladeur est un baladeur isolé (K1) qui est disposé sur l'arbre porte-baladeurs et peut être actionné par un dispositif de réglage à deux positions (KS),
- le baladeur isolé (K1) forme un premier rapport avec l'étage d'engrenages (Z1) lié au quatrième arbre (C),
- le baladeur (K3) de la première paire de baladeurs forme un troisième rapport avec l'étage d'engrenages (Z3) lié au cinquième arbre (E),
- le baladeur (K5) de la première paire de baladeurs forme un cinquième rapport avec l'étage d'engrenages (Z5) lié au cinquième arbre (E),
- le baladeur (K2) de la deuxième paire de baladeurs forme un deuxième rapport avec l'étage d'engrenages (Z2) lié au troisième arbre (A),
- le baladeur (K4) de la deuxième paire de baladeurs forme un quatrième rapport avec l'étage d'engrenages (24) lié au troisième arbre (A).

7. Boîte de vitesses à plusieurs rapports selon une des revendications 5 ou 6, dans lequel la sortie de puissance (HA) au nombre d'au moins une est liée directement à l'arbre porte-baladeurs (KW) qui peut être lié à une sortie de puissance (VA) supplémentaire par l'intermédiaire d'un embrayage de sortie (AK) et d'un engrenage avec un arbre de sortie proportionnel (PAW).

8. Boîte de vitesses à plusieurs rapports selon une des revendications précédentes, dans lequel
- la boîte de vitesses est logée dans un carter (G) dans lequel l'unité à cylindrée variable (VE) et l'unité à cylindrée fixe (KE) de la transmission hydrostatique (HG) sont disposées parallèlement l'une à l'autre,
- l'engrenage épicycloïdal (UG) est lié de manière coaxiale à l'unité à cylindrée variable (VE) et
- le moyen d'entraînement (AT) avec son arbre d'entrée (EW) et l'arbre porte-baladeurs (KW) sont disposés symériquement de part et d'autre de la transmission hydrostatique (HG), sensiblement dans le plan de symétrie de celle-ci qui s'étend entre les unités (VE, KE).

9. Boîte de vitesses à plusieurs rapports selon la revendication 8, dans laquelle l'arbre de sortie proportionnel (PAW) est disposé dans le plan de symétrie, à la suite de l'arbre porte-baladeurs (KW).

10. Boîte de vitesses à plusieurs rapports selon la revendication 8 ou 9, dans laquelle l'arbre d'entrée (EW) sort de deux côtés du carter (G) et permet simultanément une prise de puissance (ZW).

11. Boîte de vitesses à plusieurs rapports selon une des revendications précédentes, dans laquelle l'embrayage de renversement (R, V) est un embrayage à lamelles humides et les baladeurs (K1-K5) sont des baladeurs à synchroniseurs.
